Europäisches Patentamt

European Patent Office

Office européen des brevets

(19)

(11) Veröffentlichungsnummer: **0 267 148**
**B1**

(12) **EUROPÄISCHE PATENTSCHRIFT**

(45) Veröffentlichungstag der Patentschrift:
**11.04.90**

(51) Int. Cl.⁴: **F16B 13/06**

(21) Anmeldenummer: **87810594.9**

(22) Anmeldetag: **15.10.87**

(54) **Spreizdübel mit zwei unterschiedlichen Spreizkonen.**

(30) Priorität: **05.11.86 DE 3637658**

(43) Veröffentlichungstag der Anmeldung:
**11.05.88 Patentblatt 88/19**

(45) Bekanntmachung des Hinweises auf die Patenterteilung:
**11.04.90 Patentblatt 90/15**

(84) Benannte Vertragsstaaten:
**AT CH DE FR GB LI**

(56) Entgegenhaltungen:
**DE-A- 1 750 492**
**DE-A- 2 828 983**
**DE-U- 7 531 120**
**FR-A- 1 425 814**
**GB-A- 867 730**
**US-A- 2 143 086**

(73) Patentinhaber: **HILTI Aktiengesellschaft,**
**FL-9494 Schaan(LI)**

(72) Erfinder: **Herb, Armin, Wiesenweg, D-8921 Apfeldorf(DE)**

(74) Vertreter: **Wildi, Roland, Hilti Aktiengesellschaft**
**Patentabteilung, FL-9494 Schaan(LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Spreizdübel mit schalenförmigen Spreizelementen und einem im wesentlichen zylindrischen Ankerbolzen, der an seinem rückwärtigen Endbereich Mittel zur Lastaufnahme aufweist und an seinem vorderen, der Verankerung im Aufnahmematerial dienenden Spreizbereich mit zwei axial hintereinander angeordneten, konischen, sich zum vorderen Ende der Umfangskontur nähernden Auflaufflächen für die schalenförmigen Spreizelemente versehen ist, wobei die Neigung der in Setzrichtung vorderen Auflauffläche grösser ist als diejenige der rückwärtigen Auflauffläche und die Spreizelemente über in axialer Richtung verlaufende Stege miteinander verbunden sind.

Spreizdübel mit zwei axial hintereinander angeordneten Spreizkonen sind beispielsweise aus der DE-A 2 828 983 bekannt. Diese Dübel erreichen gegenüber herkömmlichen, nur einen Spreizkonus aufweisenden Spreizdübeln höhere Auszugswerte. Dies ist darauf zurückzuführen, dass bei zwei Spreizkonen der Spreizdruck im Bohrloch auf eine grössere Fläche verteilt wird. Bei zwei axial hintereinander angeordneten Spreizkonen ist sichergestellt, dass wenigstens eines der beiden Spreizelemente im Bohrloch verspreizt wird. Bei dem bekannten Spreizdübel ist es jedoch dem Zufall überlassen, welches der beiden Spreizelemente zuerst mit der Bohrlochwandung zum Eingriff kommt.

Bei der Verankerung dieser Dübelart unterscheidet man zwei Phasen. Für die Einleitung des Spreizvorganges ist ein schlanker Konus mit einem Kegelwinkel von maximal 8° notwendig. Ein solcher schlanker Konus ergibt jedoch einen grossen Nachspreizweg und eine beschränkte Spreizkraft. Für eine optimale Krafteinleitung in den Untergrund ist ein Spreizkonus mit einem Kegelwinkel von grösser als 10° zweckmässig.

Bei einem bekannten Spreizdübel weisen deshalb die beiden axial hintereinander angeordneten Spreizkonen unterschiedliche Kegelwinkel auf. Dabei ist der Kegelwinkel des vorderen Spreizkonus grösser als derjenige des rückwärtig daran anschliessenden Spreizkonus. Die schalenförmigen Spreizelemente sind über einen Steg miteinander verbunden. Durch entsprechende Abstimmung der axialen Abstände zwischen den Spreizelementen und den Spreizkonen ist sichergestellt, dass zunächst der rückwärtige Spreizkonus das rückwärtige Spreizelement aufspreizt und somit im Untergrund axial festlegt. Nach einem bestimmten Spreizweg wird auch das vordere Spreizelement durch den vorderen Spreizkonus aufgespreizt. Durch die starre Verbindung der Spreizelemente über den Steg wird die Aufspreizung der Spreizelemente gegenseitig beeinflusst, so dass keine ausreichende Verankerung erfolgt.

Der Erfindung liegt die Aufgabe zugrunde, einen Spreizdübel der genannten Art zu schaffen, der eine sichere Verankerung im Untergrund ermöglicht.

Gemäss der Erfindung wird dies dadurch erreicht, dass die Stege eine einer axialen Verschiebbarkeit der Spreizelemente zueinander dienende Verbindungseinrichtung aufweisen.

Durch die begrenzte axiale Verschiebbarkeit der Spreizelemente zueinander kann sichergestellt werden, dass zunächst die Spreizelemente im Bereich des schlankeren Konus aufgespreizt werden und damit der Spreizvorgang eingeleitet wird. Nach einem durch die Abstimmung der axialen Abstände der Spreizkonen und der Spreizelemente vorgegebenen Spreizweg werden dann auch die Spreizelemente im Bereich des steileren Spreizkonus aufgeweitet. Durch die eine axiale Verschiebbarkeit der Spreizelemente zueinander ermöglichende Verbindungseinrichtung können diese nach der Einleitung des Spreizvorganges weitgehend unabhängig voneinander gespreizt werden. So ist es beispielsweise möglich, dass das vordere Spreizelement nach dem axialen Festlegen des rückwärtigen Spreizelementes gegenüber diesem noch axial verschoben werden kann.

Die an den Stegen angeordnete Verbindungseinrichtung ergibt praktisch keine zusätzliche Material- und Bearbeitungskosten, da sie mit den Stegen im selben Arbeitsgang hergestellt werden kann.

Beim Spreizvorgang können die Stege auf Zug oder Druck beansprucht werden. Um bei einer Druckbelastung der Stege ein vorzeitiges Ausknicken der Stege zu verhindern, ist es vorteilhaft, die Verbindungseinrichtung im Uebergangsbereich der Stege zu wenigstens einem der Spreizelemente anzuordnen. Die Stege selbst werden somit durch die Verbindungseinrichtung nicht geschwächt. Eine im Uebergangsbereich angeordnete Verbindungseinrichtung lässt sich im Hinblick auf die auftretenden Beanspruchungen relativ genau dimensionieren.

Für eine einfache Herstellung des Spreizdübels ist es zweckmässig, dass die Verbindungseinrichtung aus einer als axiale Stauchzone wirkenden Querschnittsverjüngung besteht. Somit können die vorderen und die rückwärtigen Spreizelemente über die Stege miteinander einstückig verbunden werden. Zusätzliche Massnahmen wie Kleben, Löten oder Schweissen sind daher nicht notwendig. Die Querschnittsverjüngung wird vorzugsweise im Endbereich der Stege angeordnet. Der verbleibende Restquerschnitt kann sehr klein dimensioniert werden, da die Stege praktisch nur als Abstandshalter für die Spreizelemente dienen. Die Querschnittsverjüngung kann bereits beim Ausstanzen der Spreizelemente vorgesehen oder auch nachträglich angebracht werden.

Eine weitere vorteilhafte Ausführung besteht darin, die Verbindungseinrichtung als mit axialem Spiel ineinander greifende Nut- und Kammverbindung auszubilden. Die Stege und Spreizelemente greifen somit im Bereich der Verbindungseinrichtung hakenförmig ineinander ein. Das axiale Spiel ermöglicht dabei eine begrenzte axiale Verschiebbarkeit der Spreizelemente zueinander. Der Kamm kann bereits beim Stanzen der Stege vorgesehen oder nachträglich angestaucht werden.

Die Erfindung soll nachstehend anhand der sie beispielsweise wiedergebenden Zeichnungen näher erläutert werden.

Es zeigen:

Fig. 1 Eine erste Ausführung eines erfindungsgemässen Spreizdübels, teilweise im Schnitt dargestellt,

Fig. 2 eine Ansicht des in Fig. 1 dargestellten Spreizdübels, gemäss dem Pfeil A,

Fig. 3 eine weitere Ausführung eines erfindungsgemässen Spreizdübels, in Ansicht, entsprechend Fig. 2,

Fig. 4 eine dritte Ausführung eines erfindungsgemässen Spreizdübels, teilweise im Schnitt dargestellt.

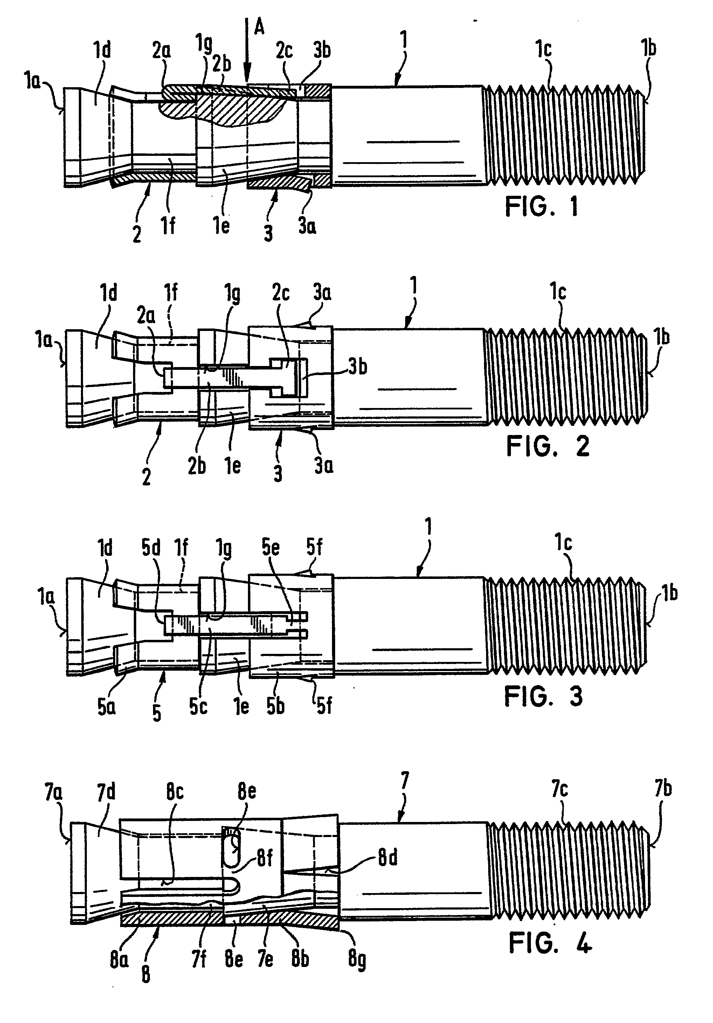

Der aus den Fig. 1 und 2 ersichtliche Spreizdübel besteht aus einem insgesamt mit 1 bezeichneten Ankerbolzen, einem insgesamt mit 2 bezeichneten vorderen Spreizelement und einem insgesamt mit 3 bezeichneten rückwärtigen Spreizelement. Der Ankerbolzen 1 weist ein in Setzrichtung vorderes Ende 1a und ein rückwärtiges Ende 1b auf. Der rückwärtige Endbereich des Ankerbolzens 1 ist mit einem Gewinde 1c versehen. Der Ankerbolzen 1 weist einen vorderen Spreizkonus 1d und einen rückwärtigen Spreizkonus 1e auf. Die Neigung des vorderen Spreizkonus 1d ist grösser als diejenige der rückwärtigen Spreizkonus 1e. Zwischen den beiden Spreizkonen 1d und 1e befindet sich ein zylindrischer Absatz 1f. Das vordere Spreizelement 2 ist über eine Faltstelle 2a mit einem sich in Längsrichtung erstreckenden Steg 2b verbunden. Der Steg 2b verläuft im Bereich des rückwärtigen Spreizkonus 1e in einer Nut 1g. Am freien Ende des Steges 2b ist dieser als Kamm 2c ausgebildet. Das rückwärtige Spreizelement 3 weist Vorsprünge 3a auf, welche sich beim Setzvorgang in der Bohrlochwandung verhaken und der Einleitung des Spreizvorganges dienen. Wie aus Fig. 2 ersichtlich ist, weist das rückwärtige Spreizelement 3 eine Ausnehmung 3b auf, welche zusammen mit dem Kamm 2c eine formschlüssige Verbindungseinrichtung bildet. Der Kamm 2c ist in der Ausnehmung 3b begrenzt axial verschiebbar geführt.

Somit ist das vordere Spreizelement 2 über den Steg 2b gegenüber dem rückwärtigem Spreizelement 3 begrenzt verschiebbar. Bei der Verankerung des Dübels wird zunächst das rückwärtige Spreizelement 3 durch den rückwärtigen Spreizkonus 1e aufgeweitet und im Bohrloch verspreizt. Die Aufspreizung des vorderen Spreizelementes 2 beginnt erst, wenn der Kamm 2c am rückwärtigen Ende der Ausnehmung 3b zur Anlage gelangt.

Der aus Fig. 3 ersichtliche Ankerbolzen 1 entspricht der in den Fig. 1 und 2 dargestellten Ausführung. Das insgesamt mit 5 bezeichnete Spreizelement ist jedoch im Gegensatz zu der in Fig. 1 und 2 dargestellten Ausführung einteilig ausgebildet und besteht aus einer vorderen Spreizschale 5a und einer rückwärtigen Spreizschale 5b. Die beiden Spreizschalen 5a und 5b sind über einen in axialer Richtung verlaufenden Steg 5c miteinander verbunden. Der Steg 5c steht über eine Faltstelle 5d mit der vorderen Spreizschale 5a in Verbindung. An seinem rückwärtigen Ende weist der Steg 5c eine Querschnittsverjüngung 5e auf. Die Querschnittsverjüngung 5e dient beim Spreizvorgang als axiale Stauchzone, welche ein axiales Verschieben der vorderen Spreizschale 5a gegenüber der bereits festgelegten rückwärtigen Spreizschale 5b ermöglicht. Um die Einleitung der Spreizung sicherzustellen, ist die rückwärtige Spreizschale 5b mit widerhakenartigen Vorsprüngen 5f versehen.

Der aus Fig. 4 ersichtliche Spreizdübel besteht aus einem insgesamt mit 7 bezeichneten Ankerbolzen und einer insgesamt mit 8 bezeichneten Spreizhülse. Der Ankerbolzen 7 weist ein in Setzrichtung vorderes Ende 7a und ein rückwärtiges Ende 7b auf. Der rückwärtige Endbereich des Ankerbolzens 7 ist mit einem Gewinde 7c versehen. Im Spreizbereich weist der Ankerbolzen 7 einen vorderen Spreizkonus 7d und einen rückwärtigen Spreizkonus 7e auf. Die Neigung des vorderen Spreizkonus 7d ist ebenfalls grösser als diejenige des rückwärtigen Spreizkonus 7e. Zwischen den beiden Spreizkonen 7d und 7e befindet sich ein zylindrischer Absatz 7f. Die Spreizhülse 8 besteht aus einer vorderen Spreizschale 8a und einer rückwärtigen Spreizschale 8b. Die vordere Spreizschale 8a weist vom vorderen Ende ausgehende Längsnuten 8c auf. Die rückwärtige Spreizschale 8b ist mit Längsschlitzen 8d versehen. Zwischen der vorderen Spreizschale 8a und der rückwärtigen Spreizschale 8b sind Umfangsnuten 8e angeordnet. Die zwischen den einzelnen Umfangsnuten verbleibenden Stege 8f bilden beim Spreizvorgang eine axiale Stauchzone. Durch die Längsschlitze 8d gebildete Vorsprünge 8g ermöglichen beim Setzvorgang ein Verhaken der Spreizhülse 8 in der Bohrlochwandung. Beim Setzvorgang wird zunächst die rückwärtige Spreizschale 8b aufgeweitet und im Bohrloch verspreizt. Anschliessend wird unter eventuellem axialem Stauchen der Stege 8f auch die vordere Spreizschale 8a durch den vorderen Spreizkonus 7d des Ankerbolzens 7 aufgeweitet.

## Patentansprüche

1. Spreizdübel mit schalenförmigen Spreizelementen (2, 3, 5a, 5b, 8a, 8b) und einem im wesentlichen zylindrischen Ankerbolzen (1, 7), der an seinem rückwärtigen Endbereich Mittel (1c, 7c) zur Lastaufnahme aufweist und an seinem vorderen, der Verankerung im Aufnahmematerial dienenden Spreizbereich mit zwei axial hintereinander angeordneten, konischen, sich zum vorderen Ende der Umfangskontur nähernden Auflaufflächen (1d, 1e, 7d, 7e) für die schalenförmigen Spreizelemente versehen ist, wobei die Neigung der in Setzrichtung vorderen Auflauffläche (1d, 7d) grösser ist als diejenige der rückwärtigen Auflauffläche (1e, 7e) und die Spreizelemente über in axialer Richtung verlaufende Stege (2b, 5c, 8f) miteinander verbunden sind, dadurch gekennzeichnet, dass die Stege (2b, 5c, 8f) eine einer axialen Verschiebbarkeit der Spreizelemente (2, 3, 5a, 5b, 8a, 8b) zueinander dienende Verbindungseinrichtung aufweisen.

2. Spreizdübel nach Anspruch 1, dadurch gekennzeichnet, dass die Verbindungseinrichtung im Übergangsbereich der Stege (2b, 5c, 8f) zu wenigstens einem der Spreizelemente (2, 3, 5a, 5b, 8a, 8b) angeordnet ist.

3. Spreizdübel nach Anspruch 1 oder 2, dadurch gekennzeichnet, dass die Verbindungseinrichtung aus einer als axiale Stauchzone wirkenden Querschnittsverjüngung (5e) besteht.

4. Spreizdübel nach einem der Ansprüche 1 bis 3, dadurch gekennzeichnet, dass die Verbindungseinrichtung als mit axialem Spiel ineinandergreifende Nut- und Kamm-Verbindung ausgebildet ist.

## Claims

1. An expansible dowel having dished expansion elements (2, 3, 5a, 5b, 8a, 8b) and a substantially cylindrical anchor bolt (1, 7) which has on its rearward end region means (1c, 7c) for the load application and is provided on its front expansion region, serving for the anchorage in the receiving material, with two conical run-up surfaces (1d, 1e, 7d, 7e), arranged axially one behind the other and towards the front end approximating to the circumferential contour, for the dished expansion elements, the inclination, in the setting direction of the front run-up surface (1d, 7d) being greater than that of the rearward run-up surface (1e, 7e) and the expansion elements being connected together by way of webs (2b, 5c, 8f) extending in the axial direction, characterised in that the webs (2b, 5c, 8f) have a connection arrangement serving for an axial displaceability of the expansion elements (2, 3, 5a, 5b, 8a, 8b) with regard to one another.

2. An expansible dowel according to claim 1, characterised in that the connection arrangement is arranged in the transition region of the webs (2b, 5c, 8f) to at least one of the expansion elements (2, 3, 5a, 5b, 8a, 8b).

3. An expansible dowel according to claim 1 or 2, characterised in that the connection mechanism consists of a cross-sectional tapering (5e) acting as an axial compression zone.

4. An expansible dowel according to one of claims 1 to 3, characterised in that the connection mechanism is designed as a groove and cog connection intermeshing with axial play.

## Revendications

1. Cheville à expansion avec des éléments d'écartement (2, 3, 5a, 5b, 8a, 8b) en forme de coque et un boulon d'ancrage (1, 7) sensiblement cylindrique lequel présente dans sa section terminale postérieure des moyens (1c, 7c) pour la réception de la charge et est muni, dans sa zone d'écartement antérieure destinée à l'ancrage dans le matériau de réception, de deux surfaces d'arrêt coniques (1d, 1e, 7d, 7e) pour les éléments d'écartement en forme de coque placées axialement l'une derrière l'autre et s'approchant du contour périphérique en direction de l'extrémité antérieure, l'inclinaison de la surface d'arrêt (1d, 7d) antérieure dans le sens de la pose étant plus grande que celle de la surface d'arrêt postérieure (1e, 7e) et les éléments d'écartement étant reliés entre eux par l'intermédiaire de barrettes (2b, 5c, 8f) s'étendant dans le sens axial, caractérisée en ce que les barrettes (2b, 5c, 8f) comprennent un dispositif de raccordement pour assurer une mobilité axiale des éléments d'écartement (2, 3, 5a, 5b, 8a, 8) l'un par rapport à l'autre.

2. Cheville à expansion selon la revendication 1, caractérisée en ce que le dispositif de raccordement se situe dans la zone de transition des barrettes (2b, 5c, 8f) vers au moins l'un des éléments d'écartement (2, 3, 5a, 5b, 8a, 8b).

3. Cheville à expansion selon l'une des revendications 1 ou 2, caractérisée en ce que le dispositif de raccordement est constitué par un rétrécissement (5e) de la section transversale agissant comme zone d'écrasement axiale.

4. Cheville à expansion selon l'une des revendications 1 à 3, caractérisée en ce que le dispositif de raccordement est conformé en assemblage à rainure et peigne s'emboîtant avec jeu axial l'un dans l'autre.

FIG. 1

FIG. 2

FIG. 3

FIG. 4